# EUROPÄISCHE PATENTSCHRIFT

(11) **EP 2 129 929 B1**
(45) Veröffentlichungstag und Bekanntmachung des Hinweises auf die Patenterteilung: **20.10.2010**
(21) Anmeldenummer: 08715951.3
(22) Anmeldetag: 22.02.2008
(51) Int. Cl.: F16D 48/06

(54) **STEUERVORRICHTUNG UND VERFAHREN ZUR ANSTEUERUNG EINES DRUCKMITTELVERBRAUCHERS UNTER VERWENDUNG EINES DRUCKDIFFERENZSENSORS**
CONTROL DEVICE AND METHOD FOR CONTROLLING A PRESSURE MEDIUM CONSUMER USING A DIFFERENTIAL PRESSURE SENSOR
DISPOSITIF DE COMMANDE ET PROCEDE DE COMMANDE D'UN RECEPTEUR D'AGENT SOUS PRESSION PAR UTILISATION D'UN CAPTEUR DE DIFFERENCE DE PRESSION

(30) Priorität: 27.02.2007 DE 102007009542
(43) Veröffentlichungstag der Anmeldung: 09.12.2009
(73) Patentinhaber: KNORR-BREMSE Systeme für Nutzfahrzeuge GmbH, 80809 München (DE)
(72) Erfinder: REBHAN, Stephan, 81373 München (DE)
(74) Vertreter: Mattusch, Gundula
(86) Internationale Anmeldenummer: PCT/EP2008/001400
(87) Internationale Veröffentlichungsnummer: WO 2008/104325

(56) Entgegenhaltungen:
- EP-A- 1 253 341
- EP-A- 1 435 469
- DE-A1- 10 316 419
- DE-A1- 19 903 344

## Beschreibung

Die Erfindung betrifft eine Steuervorrichtung, insbesondere eine Kupplungs- und Getriebesteuervorrichtung für ein Fahrzeug, mit einer Druckmittelsteuereinrichtung, der Druckmittel von einer Druckmittelquelle zuführbar ist und über die das Druckmittel zumindest einem Druckmittelverbraucher definiert zuführbar ist, um durch den Druckmittelverbraucher einen Kraftfluss in einem Antriebsstrang des Fahrzeugs einzustellen.

Weiterhin bezieht sich die Erfindung auf ein Verfahren zum Steuern einer Steuervorrichtung, insbesondere einer Kupplungs- und Getriebesteuervorrichtung für ein Fahrzeug, mit einer Druckmittelsteuereinrichtung, der Druckmittel von einer Druckmittelquelle zuführbar ist und über die das Druckmittel zumindest einem Druckmittelverbraucher definiert zuführbar ist, um durch den Druckmittelverbraucher einen Kraftfluss in einem Antriebsstrang des Fahrzeugs einzustellen.

Die DE 199 03 344 A1 beschreibt eine Hydraulikeinrichtung, die von einer Hydropumpe mit einem Hydraulikfluid versorgt wird. Von der Hydropumpe kommend strömt das Hydraulikfluid in Richtung eines Mehrwege-Magnetventils zur Betätigung einer Kolben-Zylinder-Einrichtung, die vorzugsweise ein Spannelement einer Werkzeugmaschine darstellt. Sobald eine angestrebte Position der Kolben-Zylinder-Einrichtung erreicht ist, baut sich an einer Differenzdruck-Erfassungseinrichtung, die ein Differenzdruckventil umfasst, ein Druck auf. Sobald dieser Druck im Wesentlichen dem in einer Steuerleitung vorhandenen Referenzdruck einer Konstantdruckeinrichtung entspricht, wird ein elektrischer Kontakt geschlossen, so dass ein elektrisches Signal zu einer übergeordneten Steuerung geleitet wird. Dieses Signal repräsentiert die Information, dass die Spanneinrichtung eine Endposition erreicht hat.

Die DE 103 16 419 A1 beschreibt eine Anordnung eines Differenzdrucksensors zur Überwachung einer Leckage in einem Parallelschaltgetriebe. Der Differenzdrucksensor ist zwischen den beiden Hydraulikleitungen, die die jeweiligen Nehmerzylinder ansteuern, angebracht. Der Differenzdrucksensor liefert eine Kenngröße, die mit einer Kenngröße aus einem Referenzkennfeld verglichen wird. Das Referenzkennfeld beschreibt eine Solldruckdifferenz in Abhängigkeit von aktuellen Geberzylinderpositionen. Bei einer Schwellwertüberschreitung des Differenzwertes wird auf eine Leckage geschlossen.

Die EP 1 253 341 A2 beschreibt unterschiedliche Anordnungen von Kupplungssystemen mit je ein bis drei Drucksensoren, die je ein Druckniveau eines Hydraulikmediums erfassen, das mittels einer elektronischen Steuereinheit auswertet wird. Ein 4/3-Wegeventil ermöglicht auf Grundlage nur eines Drucksensors wahlweise sowohl beide Betätigungsdrücke von zwei Kupplungssystemanordnungen als auch einen Versorgungsdruck eines Druckspeichers zu messen. Wahlweise wird jeweils ein Druck auf einem ersten Nehmerzylinder, ein Druck auf einem zweiten Nehmerzylinder bzw. ein Versorgungsdruck an einem Druckspeicher zur Messung ausgewählt und am Drucksensor angelegt. Für jedes der den beiden Nehmerzylindern jeweils zugeordneten Stellorgane sowie für den Pumpenmotor ist eine Kalibrierung von Kennfeldern bzw. Kennlinien auf Grundlage der von dem Sensor erfassten Drücke vorgesehen. Es wird vorgeschlagen, dass eine Beziehung zwischen einer einen Soll-Betätigungszustand der Kupplungsanordnung repräsentierenden Führungsgröße und einer über einen Nehmerzylinder auf die Kupplungsanordnung wirkende Ausgangsgröße mittels der Drucksensoranordnung und der Auswahlanordnung erfassten Ist-Druckwerts kalibrierbar ist. Außerdem wird vorgeschlagen, dass eine der Ermittlung eines Versorgungsdruckniveaus zugrundeliegende Beziehung zwischen dem Versorgungsdruckniveau und der wenigstens einen Kenngröße (ggf. Kennlinie oder Kennfeld) auf Grundlage eines mittels der Drucksensoranordnung erfassten Ist-Druckwerts kalibrierbar ist. Die Kalibrierung erfolgt vorzugsweise von Zeit zu Zeit, und zwar im normalen Betrieb des Kupplungssystems.

Allgemein sind Kupplungs- und Getriebesteuervorrichtungen in Kraftfahrzeugen bekannt, die Druckluft als Druckmittel verwenden und damit eine Kupplung und/oder ein Getriebe des Kraftfahrzeugs ansteuern, um einen Kraftfluss in einem Antriebstrang des Kraftfahrzeugs zu variieren. Dabei wird die Ansteuerung von einer Druckmittelsteuereinrichtung vorgenommen, der im Falle der pneumatischen Ansteuerung Druckluft von einer Druckmittelquelle oder einem Druckspeicher zugeführt wird und über die die Druckluft einem Getriebesteller und/oder einem Kupplungssteller als Druckluftverbraucher definiert zugeführt wird. Die definierte Druckluftzufuhr zu dem Getriebesteller dient insbesondere dazu, ein Übersetzungsverhältnis des Getriebes zu variieren beziehungsweise einen Gangwechsel vorzunehmen, um dadurch den Kraftfluss in dem Antriebsstrang des Kraftfahrzeugs einzustellen. Entsprechend dient die definierte Druckluftzufuhr zu dem Kupplungssteller insbesondere dazu, eine Kupplung von einem eingerückten, einen Kraftfluss in dem Antriebsstrang herstellenden Zustand in einen ausgerückten, einen Kraftfluss in dem Antriebsstrang unterbrechenden Zustand zu versetzen (oder umgekehrt). Im Falle der Ansteuerung eines pneumatischen Kupplungsstellers zur Kupplungsbetätigung wird beispielsweise ein so genannter Zentralausrücker (CPCA = engl. concentric pneumatic clutch actuator) verwendet. Um Rückschlüsse über den Zustand der Kupplung zu erhalten, werden üblicherweise Wegsensoren eingesetzt, die einen aktuellen Lagewert beziehungsweise eine aktuelle Stellung eines dem Zentralausrücker angehörenden Ausrücklagers erfassen. Insbesondere in automatischen oder automatisierten Getrieben wird unter anderem basierend auf Signalen des Wegsensors eine Getriebe- und Kupplungssteuerung/regelung durchgeführt. Zusätzlich zu dem Wegsensor werden häufig auch mehrere Drucksensoren verwendet, um eine entsprechende Regelung/Steuerung basierend auf den Signalen des Wegsensors und der Drucksensoren vornehmen zu können. So wird unter anderem ein aktueller Druck bei dem Kupplungssteller, beispielsweise in einem dem Zentralausrücker angehörenden Betätigungszylinder, erfasst. Auch durch die Druckerfassung lassen sich Rückschlüsse über den Zustand der Kupplung ziehen. Weiterhin wird ein bei der Druckquelle vorliegender Druck beziehungsweise ein Vorratsdruck erfasst. Auch sind häufig weitere Drucksensoren vorgesehen, die Drücke in Zwischenstufen zwischen der Druckmittelquelle und dem Getriebe/Kupplungssteller erfassen. Durch die Verwendung mehrerer Drucksensoren kann zum einen die Ansteuerqualität der pneumatischen Kupplungsbetätigung verbessert werden. Zum anderen wird eine Redundanz geschaffen, so dass beispielsweise bei Ausfall des wegsensors eine Steuerung/Regelung basierend auf Signalen der Drucksensoren fortgeführt werden kann. Allerdings ist die Verwendung mehrerer Drucksensoren äußerst kostspielig.

Der Erfindung liegt daher die Aufgabe zugrunde, die gattungsgemäßen Steuervorrichtungen und Verfahren derart weiterzubilden, dass die Anzahl der Drucksensoren verringert werden kann.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Steuervorrichtung baut auf dem gattungsgemäßen Stand er Technik dadurch auf, dass ein Druckdifferenzsensor vorgesehen ist, mittels dem eine Druckdifferenz zwischen einem bei dem Druckmittelverbraucher vorliegenden Druck und einem bei der Druckmittelquelle vorliegenden Druck erfasst wird, wobei die Steuervorrichtung ein Steuergerät umfasst und wobei das Verfahren folgenden Schritt umfasst:
- Durchführen eines Kalibrierungsbetriebs mittels des Steuergeräts zur Ermittlung der bei dem Druckmittelverbraucher und der Druckmittelquelle oder bei den asynchron betätigbaren Stellgliedern vorliegenden Absolutdrücke basierend auf Signalen von dem Druckdifferenzsensor,
- wobei die entspredenden Absolutdrücke in dem Steuegerät gespeichert werden und als Grundlage für die Steuerung/Regelung zur Verfögung gestellt werden.
Anstelle mehrerer kostspieliger Drucksensoren wird erfingdungsgemäß lediglich ein Druckdifferenzsensor eingesetzt. Der Druckdifferenzsensor erfasst insbesondere die Druckdifferenz zwischen der als Druckmittel- oder vorratsspeicher ausgebildeten Druckmittelquelle und dem Druckmittelverbraucher, welcher vorzugsweise durch einen Kupplungssteller, aber ebenfalls durch einen Getriebesteller gebildet werden kann. Eine geeignete Steuerung/Regelung des Kraftflusses im Antriebsstrang des Kraftfahrzeugs, insbesondere der Stellung einer Kupplung, kann auch basierend auf Signalen des Druckdifferenzsensors vorgenommen werden. Die Steuerung/Regelung basierend auf den Signalen des Druckdifferenzsensors beruht auf der Erkenntnis, dass unter gewissen Betriebsbedingungen der Steuervorrichtung, insbesondere des Druckmittelverbrauchers, zumindest einer der zur Druckdifferenz beitragenden Drücke bekannt ist. Daraus kann entsprechend über die erfasste Druckdifferenz auf den anderen zur Druckdifferenz beitragenden Druck geschlossen werden. Liegen hingegen Betriebsbedingungen vor, bei denen keiner der zur Druckdifferenz beitragenden aktuellen Drücke bekannt ist, kann weiterhin zumindest einer der zuvor abgeleiteten Drücke dazu verwendet werden, einen aktuellen, angenäherten Druck aufgrund einer Überwachung des Betriebs der Druckmittelsteuereinrichtung zu bestimmen. Somit kann mindestens ein weiterer Drucksensor bei annähernd gleicher Funktion eingespart werden.

Die erfindungsgemäße Steuervorrichtung kann in vorteilhafter Weise derart weitergebildet sein, dass die Druckmittelsteuereinrichtung zu deren Ansteuerung mit einem Steuergerät gekoppelt ist, um eine Einstellung der definierten Druckmittelzufuhr vorzunehmen. Da im Zusammenhang mit der Getriebe- und/oder Kupplungssteuerung ohnehin ein Steuergerät verwendet wird, bedarf es lediglich einer Anpassung der Software des Steuergeräts, um die von dem Druckdifferenzsensor gelieferten Signale auswerten und eine entsprechende Steuerung/Regelung vornehmen zu können.

Weiterhin kann die erfindungsgemäße Steuervorrichtung so verwirklicht werden, dass das Steuergerät geeignet ist, bei einem Kalibrierungsbetrieb des Druckdifferenzsensors über die Druckdifferenz auf einen Absolutdruck bei der Druckmittelquelle oder einen Absolutdruck bei dem Druckmittelverbraucher zu schließen. Vorzugsweise wird der Kalibrierungsbetrieb des Druckdifferenzsensors dann vorgenommen, wenn ein Betriebszustand der Steuervorrichtung vorliegt, bei dem zumindest einer der bei der Druckmittelquelle oder dem Druckmittelverbraucher vorliegenden Drücke bekannt ist. Dementsprechend wird durch das Steuergerät über die gelieferte Druckdifferenz der andere, zur Druckdifferenz beitragende Druck errechnet. Die entsprechenden Drücke können in dem Steuergerät gespeichert werden und als Grundlage für die Steuerung/Regelung zur Verfügung gestellt werden.

Darüber hinaus kann die erfindungsgemäße Steuervorrichtung derart umgesetzt werden, dass das Steuergerät geeignet ist, den Kalibrierungsbetrieb durchzuführen, wenn bei dem Druckmittelverbraucher Atmosphärendruck herrscht. Dies ist beispielsweise dann der Fall, wenn eine Entlüftung des Druckmittelverbrauchers vorgenommen wird, bei der der Druckmittelverbraucher mit der Atmosphäre verbunden ist. Ferner kann die erfindungsgemäße Steuervorrichtung so ausgebildet sein, dass der Druckmittelverbraucher ein Kupplungssteller zur Betätigung einer Kupplung ist, um den durch die Kupplung übertragenen Kraftfluss zu variieren. Ein derartiger Kupplungssteller kann beispielsweise ein Zentralausrücker sein, der als Druckmittelverbraucher fungiert.

In diesem Zusammenhang kann die erfindungsgemäße Steuervorrichtung derart realisiert werden, dass bei dem Kupplungssteller in einem nicht die Kupplung betätigenden Zustand nahezu der Atmosphärendruck herrscht. Dieser Fall liegt vorzugsweise dann vor, wenn der Kupplungssteller entlüftet wird und keine Kupplungsbetätigung, insbesondere keine Kupplungsausrückung, vornimmt, wobei sich die Kupplung dann in einem eingerückten, einen Kraftfluss herstellenden Zustand befindet. Somit kann der Druckdifferenzsensor bei voll eingerückter Kupplung über die Druckdifferenz auf den bei der Druckmittelquelle vorliegenden Druck beziehungsweise den Vorratsdruck kalibriert werden, da der Kupplungsstellerdruck dann dem bekannten Atmosphärenbeziehungsweise Umgebungsdruck entspricht.

Weiterhin kann die erfindungsgemäße Steuervorrichtung so verwirklicht werden, dass das Steuergerät geeignet ist, in einem Druckmittelverbrauchsbetrieb des zumindest einen Druckmittelverbrauchers basierend auf Druckmittelverbrauchskennlinien und den im Kalibrierungsbetrieb bestimmten Absolutdrücken einen aktuellen Absolutdruck bei dem Druckmittelverbraucher und/oder bei der Druckmittelquelle zu bestimmen. So verändert sich der Vorratsdruck insbesondere bei der Betätigung des Getriebestellers, der beispielsweise in der Form von zumindest einem Getriebestellzylinder, insbesondere einem Gang- und Gassenzylinder, ausgebildet ist, relativ schnell. Wird gleichzeitig die Kupplung durch den Kupplungssteller betätigt, kann eine angenäherte Berechnung der Absolutdrücke über im Steuergerät abgelegte beziehungsweise gespeicherte Druckmittelverbrauchskurven durchgeführt werden. Die Druckmittelverbrauchskurven hängen dabei vorzugsweise von einer Öffnungsdauer von durch die Druckmittelsteuereinrichtung verwendeten Ventilen ab. Somit lassen sich weiterhin, ausgehend von den zuvor während des Kalibrierungsbetriebs des Druckdifferenzsensors erhaltenen Absolutdrücken, aktuelle, angenäherte Absolutdrücke näherungsweise berechnen und auch vorhersagen.

Vorzugsweise wird die erfindungsgemäße Steuervorrichtung so ausgestaltet, dass das Steuergerät geeignet ist, basierend auf Signalen von dem Druckdifferenzsensor die Betätigung der Kupplung zu steuern/regeln. Insbesondere wird durch die Erfassung der Druckdifferenz ermöglicht, die Betätigung der Kupplung, insbesondere die Stellung der Kupplung, zu steuern/regeln. Die Steuerung/Regelung kann auch unterstützend zu derjenigen Steuerung/Regelung stattfinden, die basierend auf von einem die Kupplungsstellung überwachenden Wegsensor gelieferten Signalen vorgenommen wird.

In diesem Zusammenhang kann die erfindungsgemäße Steuervorrichtung so verwirklicht werden, dass das Steuergerät geeignet ist, die Steuerung/Regelung der Kupplungsbetätigung in Abhängigkeit von einer Kraft-Weg-Kennlinie einer der Kupplung zugeordneten Kupplungsfeder vorzunehmen. Fällt beispielsweise ein Wegsensor zur Stellungserfassung der Kupplung aus, kann der Druckdifferenzsensor verwendet werden, um auf Grundlage von dessen gelieferten Signalen die Kupplungsstellung über den abgeleiteten Absolutdruck bei dem Kupplungssteller, der einer bestimmten Kupplungskraft entspricht, und die dazugehörige bekannte Kraft-Weg-Kurve zu steuern/regeln. Dies erfolgt insbesondere über die Kraft-Weg-Kurve der Kupplungsfeder, die eine Korrelation zwischen der Kupplungskraft, dem Kupplungsstellweg und dem bei dem Kupplungssteller vorliegenden Druck zulässt. Dadurch kann auf den Zustand der Kupplung auf der Grundlage des bei dem Kupplungssteller vorliegenden Drucks geschlossen werden. Damit bleibt die Kupplung auch bei nicht funktionierendem Wegsensor steuerbar/regelbar.

Weiterhin kann die erfindungsgemäße Steuervorrichtung so weitergebildet werden, dass das Steuergerät geeignet ist, basierend auf Signalen von dem Druckdifferenzsensor die Betätigung der Kupplung zu steuern/regeln, wenn ein Wegsensor zur Stellwegerfassung der Kupplung ausgefallen ist. Somit schafft das Vorsehen des Druckdifferenzsensors eine erhöhte Sicherheit der Kupplungssteuerung und wird vorzugsweise zur Fail-Safe-Steuerung/Regelung bei ausgefallenem beziehungsweise nicht funktionierendem Wegsensor verwendet.

In diesem Zusammenhang wird es für besonders vorteilhaft erachtet, die erfindungsgemäße Steuervorrichtung so auszubilden, dass das Steuergerät geeignet ist, einer Fehlermeldung auszugeben, wenn der Wegsensor ausgefallen ist. Beispielsweise kann die Fail-Safe-Steuerung/Regelung ausgeführt und gleichzeitig eine visuelle oder akustische Fehlermeldung an ein Cockpit des Fahrzeugs ausgegeben werden. Denkbar wäre zum Beispiel, dass an einem Display des Cockpits die Fehlermeldung in der Form "Fehlermeldung im Druckversorgungsgetriebeautomat" als Textmeldung ausgegeben wird. Dabei kann die Fehlermeldung direkt oder über einen Datenbus an das Cockpit geleitet werden.

Ferner wird die erfindungsgemäße Steuervorrichtung derart umgesetzt, dass die Druckmittelquelle ein Druckspeicher ist.

Darüber hinaus kann die erfindungsgemäße Steuervorrichtung so weitergebildet werden, dass die Druckmittelquelle einen Druckbegrenzer umfasst, über den das Druckmittel von der Druckmittelquelle der Druckmittelsteuereinrichtung zuführbar ist.

In einer alternativen Ausführungsform baut die erfindungsgemäße Steuervorrichtung auf dem gattungsgemäßen Stand der Technik dadurch auf, dass ein Druckdifferenzsensor vorgesehen ist, mittels dem eine Druckdifferenz zwischen Drücken, die bei asynchron betätigten Stellgliedern des Druckmittelverbrauchers vorliegenen, Drücken erfasst wird, wobei die Steuervorrichtung ein Steuergerät umfasst und wobei das Verfahren folgende Schritte umfasst:
- Durchführen eines Kalibrierungsbetriebs mittels des Steuergeräts zur Ermittlung der bei dem Druckmittelverbraucher und der Druckminelquelle oder bei den asynchron betätigbaren Stettgtiedern vorliegenden Absolutdrücke basierend auf Signalen von dem Orudcdifferenzsensor, und
- wobei die entsprechenden Abolutdrücke in dem Steuergerät gespeichurt werden und als brundlage für die Steuerung / Regelung Verfügung gestellt werden.

Dadurch, dass die Stellglieder asynchron, also nicht gleichzeitig betätigt werden, beispielsweise pneumatisch, kann anhand des Druckdifferenzsensors zumindest auf eine Druckänderung bei einem der Stellglieder geschlossen werden. Dadurch kann beispielsweise über Kennlinien und durch Auswertungen/Berechnungen des Steuergeräts auf die Stellung beziehungsweise Stellungsänderung des entsprechenden Stellglieds geschlossen werden. Auch in diesem Fall kann es vorteilhaft sein, den Kalibrierungsbetrieb durchzufüh-ren, um den Absolutdruck bei dem entsprechenden Stellglied zu ermitteln und auf der Grundlage des Absolutdrucks und der ermittelten Druckänderung die Stellung des Stellglieds zu steuern/regeln.

In diesem Zusammenhang ist es besonders vorteilhaft, die erfindungsgemäße Steuervorrichtung derart weiterzubilden, dass die asynchron betätigten Stellglieder durch einen Gangzylinder und einen Gassenzylinder eines Getriebestellers ausgebildet werden.

Das erfindungsgemäße Verfahren zum Steuern einer Steuervorrichtung baut auf dem gattungsgemäßen Stand der Technik dadurch auf, dass durch einen Druckdifferenzsensor eine Druckdifferenz zwischen einem bei dem Druckmittelverbraucher vorliegenden Druck und einem bei der Druckmittelquelle vorliegenden Druck erfasst wird. Dadurch ergeben sich die im Zusammenhang mit der erfindungsgemäßen Steuervorrichtung erläuterten Vorteile in gleicher oder ähnlicher Weise, weshalb zur Vermeidung von Wiederholungen auf die entsprechenden Ausführungen im Zusammenhang mit der erfindungsgemäßen Steuervorrichtung verwiesen wird.

Gleiches gilt sinngemäß für die folgenden bevorzugten Ausführungsformen des erfindungsgemäßen Verfahrens, weshalb zur Vermeidung von Wiederholungen auch diesbezüglich auf die entsprechenden Ausführungen im Zusammenhang mit der erfindungsgemäßen Steuervorrichtung verwiesen wird.

Das erfindungsgemäße Verfahren kann in vorteilhafter Weise so weitergebildet werden, dass die Druckmittelsteuereinrichtung von einem Steuergerät angesteuert wird, um eine Einstellung der definierten Druckmittelzufuhr vorzunehmen.

Weiterhin kann das erfindungsgemäße Verfahren derart realisiert werden, dass das Steuergerät bei einem Kalibrierungsbetrieb des Druckdifferenzsensors über die Druckdifferenz auf einen Absolutdruck bei der Druckmittelquelle oder einen Absolutdruck bei dem Druckmittelverbraucher schließt.

In diesem Zusammenhang ist es besonders vorteilhaft, das erfindungsgemäße Verfahren so auszuführen, dass das Steuergerät den Kalibrierungsbetrieb durchführt, wenn bei dem Druckmittelverbraucher Atmosphärendruck herrscht.

Darüber hinaus kann das erfindungsgemäße Verfahren so umgesetzt werden, dass der Druckmittelverbraucher ein Kupplungssteller ist, der eine Kupplung betätigt, um den durch die Kupplung übertragenen Kraftfluss zu variieren.

Vorzugsweise wird das erfindungsgemäße Verfahren derart realisiert, dass bei dem Kupplungssteller in einem nicht die Kupplung betätigenden Zustand nahezu der Atmosphärendruck herrscht.

Ferner kann das erfindungsgemäße Verfahren derart ausgestaltet werden, dass das Steuergerät in einem Druckmittelverbrauchsbetrieb des zumindest einen Druckmittelverbrauchers basierend auf Druckmittelverbrauchskennlinien und den im Kalibrierungsbetrieb bestimmten Absolutdrücken einen aktuellen Absolutdruck bei dem Druckmittelverbraucher und/oder bei der Druckmittelquelle bestimmt.

Des Weiteren wird das erfindungsgemäße Verfahren bevorzugt so umgesetzt, dass das Steuergerät basierend auf Signalen von dem Druckdifferenzsensor die Betätigung der Kupplung steuert/regelt.

In diesem Zusammenhang ist es besonders vorteilhaft, das erfindungsgemäße Verfahren so auszubilden, dass das Steuergerät die Steuerung/Regelung der Kupplungsbetätigung in Abhängigkeit von einer Kraft-Weg-Kennlinie einer der Kupplung zugeordneten Kupplungsfeder vornimmt.

Ferner kann das erfindungsgemäße Verfahren derart weitergebildet werden, dass das Steuergerät basierend auf Signalen von dem Druckdifferenzsensor die Betätigung der Kupplung steuert/regelt, wenn ein Wegsensor zur Stellwegerfassung der Kupplung ausgefallen ist.

In diesem Zusammenhang wird es für besonders vorteilhaft erachtet, das erfindungsgemäße Verfahren so auszubilden, dass das Steuergerät eine Fehlermeldung ausgibt, wenn der Wegsensor ausgefallen ist.

Darüber hinaus kann das erfindungsgemäße Verfahren so ausgeführt werden, dass die Druckmittelquelle einen Druckbegrenzer umfasst, über den das Druckmittel von der Druckmittelquelle der Druckmittelsteuereinrichtung zugeführt wird.

In einer alternativen Ausführungsform baut das erfindungsgemäße Verfahren auf dem gattungsgemäßen Stand der Technik dadurch auf, dass durch einen Druckdifferenzsensor eine Druckdifferenz zwischen Drücken, die bei asynchron betätigten Stellgliedern des Druckmittelverbrauchers vorliegen, erfasst wird.

In diesem Zusammenhang wird es für besonders vorteilhaft erachtet, das erfindungsgemäße Verfahren so auszuführen, dass die Druckdifferenz zwischen dem Druck bei einem Gangzylinder und dem Druck bei einem Gassenzylinder eines Getriebestellers erfasst wird.

Die Erfindung wird nun mit Bezug auf die begleitenden Zeichnungen anhand einer bevorzugten Ausführungsform beispielhaft erläutert

Es zeigt:
- Figur 1: eine schematische Darstellung der erfindungsge- mäßen Steuervorrichtung, die zur Durchführung des erfindungsgemäßen Verfahrens geeignet ist, gemäß einem ersten Ausführungsbeispiel der Er- findung;
- Figur 2: eine schematische Darstellung der erfindungsge- mäßen Steuervorrichtung gemäß einem zweiten Aus- führungsbeispiel der Erfindung; und
- Figur 3: eine schematische Darstellung der erfindungsge- mäßen Steuervorrichtung gemäß einem dritten Aus- führungsbeispiel der Erfindung.

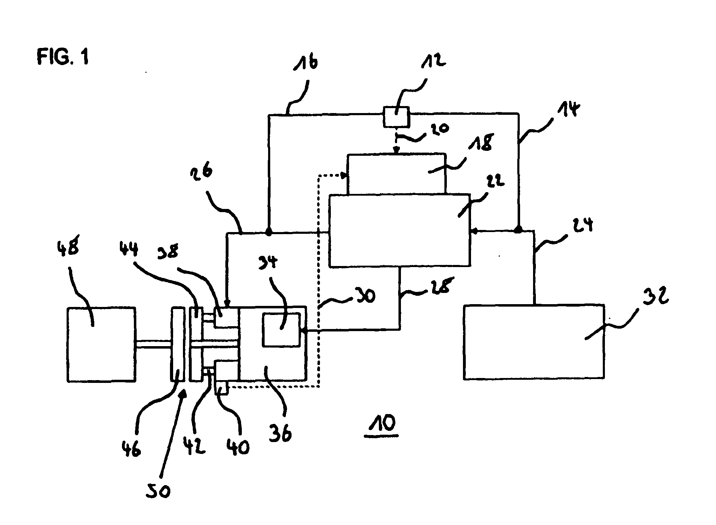

Figur 1 zeigt eine schematische Darstellung der erfindungsgemäßen Steuervorrichtung 10, die zur Durchführung des erfindungsgemäßen Verfahrens geeignet ist, gemäß einem
ersten Ausführungsbeispiel der Erfindung. Im dargestellten Fall bildet die Steuervorrichtung 10 eine pneumatische Kupplungs- und Getriebesteuervorrichtung eines Kraftfahrzeugs aus. Zu diesem Zweck umfasst die Steuervorrichtung 10 einen Druckmittelspeicher 32, in dem in diesem Ausführungsbeispiel Druckluft als Druckmittel gespeichert ist. Die Druckluft wird dem Druckmittelspeicher 32 beispielsweise durch einen nicht dargestellten und auch nicht näher interessierenden Kompressor oder in sonstiger Weise zugeführt. Der Druckmittelspeicher 32 ist über eine Druckmittelleitung 24 mit einer Druckmittelsteuereinrichtung 22 zur Druckmittelzufuhr, insbesondere zur Druckluftzufuhr, gekoppelt. Die Druckmittelsteuereinrichtung 22 wird beispielsweise durch einen zur Ansteuerung eines Getriebes 36 und einer Kupplung 50 vorgesehenen Magnetventilblock gebildet. Zu diesem Zweck ist die Druckmittelsteuereinrichtung 22 über eine Druckmittelleitung 26 mit einem Kupplungssteller 38 gekoppelt, wodurch dem Kupplungssteller 38 definiert Druckmittel, in diesem Fall Druckluft, von der Druckmittelsteuereinrichtung 22 zuführbar ist. Der Kupplungssteller 38 ist in diesem Ausführungsbeispiel an dem Getriebe 36 vorgesehen und dient dazu, die Kupplung 50 über ein dem Kupplungssteller 38 zugeordnetes Stellglied 42 zur Unterbrechung und Herstellung eines Kraft- beziehungsweise Drehmomentflusses zwischen dem Getriebe 36 und einem Verbrennungsmotor 48, also in einem Antriebsstrang des Kraftfahrzeugs, zu betätigen. Daher ist das Stellglied 42 mit einer bewegbar und drehfest an einer Getriebeeingangswelle gelagerten Kupplungsscheibe 44 gekoppelt. Die bewegbare Kupplungsscheibe 44 ist durch das Stellglied 42 auf eine unbewegliche und drehfest an einer Antriebswelle des Verbrennungsmotors 48 gelagerte Kupplungsscheibe 46 zu bewegbar sowie von dieser weg bewegbar. Insbesondere ist die Kupplung 50 in diesem Ausführungsbeispiel dergestalt, dass die bewegbare Kupplungsscheibe 44 durch eine nicht dargestellte Kupplungsfeder zur Herstellung des Kraftflusses gegen die Kupplungsscheibe 46 vorgespannt wird und durch Betätigung des Stellglieds 42 entgegen der Vorspannung der Kupplungsfeder bewegbar ist. Weiterhin ist ein Wegsensor 40 vorgesehen, durch den eine Stellung des Stellglieds 42 und damit eine Stellung der bewegbaren Kupplungsscheibe 44 erfassbar ist. Darüber hinaus ist die Druckmittelsteuereinrichtung 22 mit einem Getriebesteller 34 über eine Druckmittelleitung 28 gekoppelt, wodurch dem Getriebesteller 34 ebenso wie dem Kupplungssteller 38 definiert Druckmittel zuführbar ist. Der Getriebesteller 34 dient in diesem Zusammenhang zur Einstellung beziehungsweise Änderung eines Übersetzungsverhältnisses des Getriebes 36, wodurch ein Kraftfluss in dem Antriebstrang des Fahrzeugs verändert werden kann. Zur Erfassung einer Druckdifferenz zwischen einem in der Leitung 26 vorliegenden Druck und einem in der Leitung 24 vorliegenden Druck ist ein Druckdifferenzsensor 12 vorgesehen. Dieser ist mit einem Druckdifferenzsensoranschluss 16 mit der Druckmittelleitung 26 und mit einem Druckdifferenzsensoranschluss 14 mit der Druckmittelleitung 24 verbunden. Zur Verarbeitung der Signale des Druckdifferenzsensors 12 und des Wegsensors 40 ist ein Steuergerät 18 vorgesehen, das die entsprechenden Signale jeweils über die elektrischen Kopplungen 20 und 30 erhält. Das Steuergerät 18 dient dabei zur Ansteuerung der Druckmittelsteuereinrichtung 22, um jeweils eine definierte Druckmittelzufuhr zu dem Kupplungssteller 38 und Getriebesteller 34 zu ermöglichen beziehungsweise vorzunehmen.

Im Folgenden wird die Betriebsweise der erfindungsgemäßen Steuervorrichtung 10 zunächst mit funktionierendem und anschließend mit ausgefallenem Wegsensor 40 beschrieben, wobei das erfindungsgemäße Verfahren zur Steuerung/Regelung des Kraftflusses in dem Antriebsstrang, insbesondere des Stellwegs der Kupplung 50, von dem Steuergerät 18 ausgeführt wird. In bestimmten Fahrbetrieben des Kraftfahrzeugs befindet sich die Kupplung 50 in einem eingerückten Zustand, bei dem von dem Verbrennungsmotor 48 ein Antriebsmoment über die Kupplung 50 auf das Getriebe 36 übertragen wird. Dementsprechend steuert das Steuergerät 18 die Druckmittelsteuereinrichtung 22 derart an, dass kein Druckmittel von dem Druckmittelspeicher 32 dem Kupplungssteller 38 und Getriebesteller 34 über die Druckmittelsteuereinrichtung 22 zugeführt wird. Demnach befindet sich der Kupplungssteller 38 in einem entlüfteten Zustand, das heißt im Kupplungssteller 38 sowie in der Druckmittelleitung 26 herrscht im Wesentlichen ein Atmosphärendruck. Ebenso liegt auch bei dem Getriebesteller 34 sowie in der Druckmittelleitung 28 aufgrund der Entlüftung der Atmosphärendruck vor. Die jeweilige Entlüftung des Kupplungsstellers 38 und des Getriebestellers 34 wird dabei vorzugsweise durch die Druckmittelsteuereinrichtung 22 vorgenommen. Zur Überwachung der Stellung der Kupplung 50 liefert der Wegsensor 40 dem Steuergerät 18 mit dem Stellweg des Stellglieds 42 korrelierende Signale, die das Steuergerät 18 entsprechend auswertet. Darüber hinaus wird dieser konstante Fahrbetrieb des Kraftfahrzeugs genutzt, um den Druckdifferenzsensor 12 zu kalibrieren. Das Steuergerät 18 erfasst von dem Druckdifferenzsensor 12 mit einer Druckdifferenz zwischen den Drücken in der Druckmittelleitung 26 und 24 korrelierte Signale. Aufgrund der Tatsache, dass der Wegsensor 40 Signale liefert, die auf einen eingerückten Zustand der Kupplung 50 hindeuten, leitet das Steuergerät 18 ab, dass in der Druckmittelleitung 26 oder bei dem Kupplungssteller 38 ein Atmosphärendruck herrscht, welcher bekannt ist. Somit erlangt das Steuergerät 18 zunächst den Absolutdruck in der Druckmittelleitung 26 ohne weitere Berechnungen anstellen zu müssen und speichert diesen Absolutdruck in einem Speicher ab. Aufgrund der von dem Druckdifferenzsensor 12 gelieferten Druckdifferenz zwischen der Druckmittelleitung 26, in der der Atmosphärendruck herrscht, und der Druckmittelleitung 24, kann das Steuergerät weiterhin auf den Absolutdruck in der Leitung 24 und dem Druckmittelspeicher 32 schließen. Vorzugsweise wird auch der Absolutdruck in der Leitung 24 in dem Speicher abgelegt. Dies ist jedoch nicht zwingend erforderlich, da die Kenntnis eines Absolutdrucks (in der Druckmittelleitung 24 oder 26) ausreicht, um über die von dem Druckdifferenzsensor 12 gelieferte Druckdifferenz auf den anderen Absolutdruck zu schließen. Folglich hat das Steuergerät 18 aufgrund dieses Kalibrierungsbetriebs anhand der Druckdifferenz die Absolutdrücke in den Druckmittelleitungen 24 und 26 bestimmt. Weiterhin werden auch Druckschwankungen in der Druckmittelleitung 24 und dem Druckmittelspeicher 32 bei anhaltendem konstantem Fahrbetrieb detektiert, solange der Wegsensor 40 keine Stellungsänderung der Kupplung, insbesondere der Kupplungsscheibe 44, signalisiert. Somit überwacht das Steuergerät 18 den Absolutdruck in dem Druckmittelspeicher 32 und leitet entsprechende Maßnahmen ein, sollte ein bestimmter Druckschwellenwert unter- oder überschritten werden, beispielsweise durch Betreiben des Kompressors bei Unterschreiten eines vorgegebenen Druckschwellenwert. Ist es
aufgrund des sich ändernden Fahrbetriebs notwendig, die Kupplung 50 auszurücken und das Übersetzungsverhältnis des Getriebes 36 zu ändern, steuert das Steuergerät 18 die Druckmittelsteuereinrichtung 22 an. Aufgrund der Ansteuerung der Druckmittelsteuereinrichtung 22 wird eine definierte Druckmittelzufuhr zu dem Kupplungssteller 38 von dem Druckmittelspeicher 32 über die Druckmittelleitung 24, die Druckmittelsteuereinrichtung 22 und die Druckmittelleitung 26 eingeleitet. Ebenso wird aufgrund dieser Ansteuerung eine definierte Druckmittelzufuhr zu dem Getriebesteller 34 eingeleitet, indem Druckmittel von dem Druckmittelspeicher 32 über die Druckmittelleitung 24, die Druckmittelsteuereinrichtung 22 und die Druckmittelleitung 28 dem Getriebesteller 34 definiert zugeführt wird. Insbesondere bei der Druckmittelzufuhr zu dem Getriebesteller 34, beispielsweise bei der Ansteuerung von Getriebestellzylindern, verändert sich der in der Druckmittelleitung 24 vorliegende Druck schnell beziehungsweise fällt stark ab. Der Kupplungssteller 38 ändert aufgrund der Druckmittelzufuhr die Stellung des Stellglieds 42 und damit auch die Stellung der beweglichen Kupplungsscheibe 44 zur Unterbrechung des Kraftflusses zwischen dem Verbrennungsmotor 48 und dem Getriebe 36. Die Stellungsänderung des Stellglieds 42 wird dabei von dem Wegsensor 40 erfasst und entsprechende Signale dem Steuergerät 18 zugeführt. Basierend auf den von dem Wegsensor 40 gelieferten Signalen erlangt das Steuergerät 18 Kenntnis über die Kupplungsstellung und führt dementsprechend unter Einbeziehung weiterer Parameter die Regelung/Steuerung aus. Zu diesem Zeitpunkt liegt in der Druckmittelleitung 26 und dem Kupplungssteller 38 kein Atmosphärendruck mehr vor. Daher stellt das Steuergerät 18 Berechnungen basierend auf den im Kalibrierungsbetrieb ermittelten Absolutdruck in der Druckmittelleitung 24 und dem Druckmittelspeicher 32 und Druckverbrauchskennlinien an, um auf die aktuellen Absolutdrücke in den Druckmittelleitungen 24 und 26 schließen zu können. Die Druckmittelverbrauchskurven, in diesem Fall Druckluftverbrauchskurven, sind vorbestimmte Kennlinien, durch die auf den Druckabfall in der Druckmittelleitung 24 geschlossen werden kann. Vorzugsweise hängen diese Druckmittelverbrauchskennlinien von einer Öffnungsdauer der in der Druckmittelsteuereinrichtung 22 vorgesehenen Ventile ab, über die im Falle der als Ventilblock ausgebildeten Druckmittelsteuereinrichtung 22 der Druckabfall in der Druckmittelleitung 24 annähernd bestimmt werden kann. Aus dem Druckabfall berechnet das Steuergerät 18 somit den aktuellen, angenäherten Absolutdruck in der Druckmittelleitung 24, wobei sie über die von dem Druckdifferenzsensor 12 gelieferte aktuelle Druckdifferenz auf den angenäherten, aktuellen Absolutdruck in der Druckmittelleitung 26 schließt. Somit überwacht das Steuergerät 18 fortlaufend die Absolutdrücke in den Druckmittelleitungen 24 und 26, wobei bei funktionierendem Wegsensor 40 dennoch auf der Grundlage der von dem Wegsensor 40 gelieferten Signale entsprechend dem Fahrbetrieb des Kraftfahrzeugs geregelt wird.

Tritt der Fall ein, dass der Wegsensor 40 ausfällt und der Steuereinrichtung 18 keine Signale mehr liefert, ist die Steuereinrichtung 18 dennoch dazu imstande, den Kraftfluss im Antriebsstrang, insbesondere die Stellung der Kupplung, zu steuern/regeln. Durch die während des Kalibrierungsbetriebs erlangten Absolutdrücke, die aufgrund der von dem Druckdifferenzsensor 12 gelieferten Signale abgeleitet werden, und durch die Berechnung erlangten angenäherten aktuellen Absolutdrücke, lässt sich die Stellung der Kupplung und damit der Kraftfluss im Antriebsstrang weiterhin steuern/regeln. Die Steuerung/Regelung erfolgt in diesem Fall in Verbindung mit einer in dem Speicher des Steuergeräts 18 gespeicherten Kraft-Weg-Kennlinie beziehungsweise einer Kraft-Weg-Kurve der der Kupplung 50 zugeordneten Kupplungsfeder. Durch die Kraft-Weg-Kennlinie kann das Speichergerät 18 aufgrund der Kenntnis des in der Druckmittelleitung 26 und dem Kupplungssteller 38 vorliegenden angenäherten Absolutdrucks auf die Stellung der Kupplung 50, insbesondere der Kupplungsscheibe 44, schließen. Bei fortlaufendem Betrieb bezieht das Steuergerät 18 kontinuierlich den angenäherten und gegebenenfalls sich ändernden Absolutdruck in der Druckmittelleitung 24 und gelangt über die Druckdifferenz auf den Absolutdruck in der Druckmittelleitung 26. Der aktuelle, angenäherte Absolutdruck in der Druckmittelleitung 24 wird dabei, wie vorstehend erläutert, basierend auf den Druckmittelverbrauchskennlinien annähernd berechnet. Somit lässt sich die Stellung der Kupplung 50 selbst bei Ausfall des Wegsensors 40 weiter steuern/regeln, wodurch eine so genannte Fail-Safe-Funktion ermöglicht wird.

Darüber hinaus wird angemerkt, dass das Steuergerät 18 auch auf der Grundlage der Signale des funktionierenden Wegsensors 40 und zusätzlich der Signale des Druckdifferenzsensors 12 die Regelung/Steuerung vornehmen kann, um die Regelgüte zu verbessern.

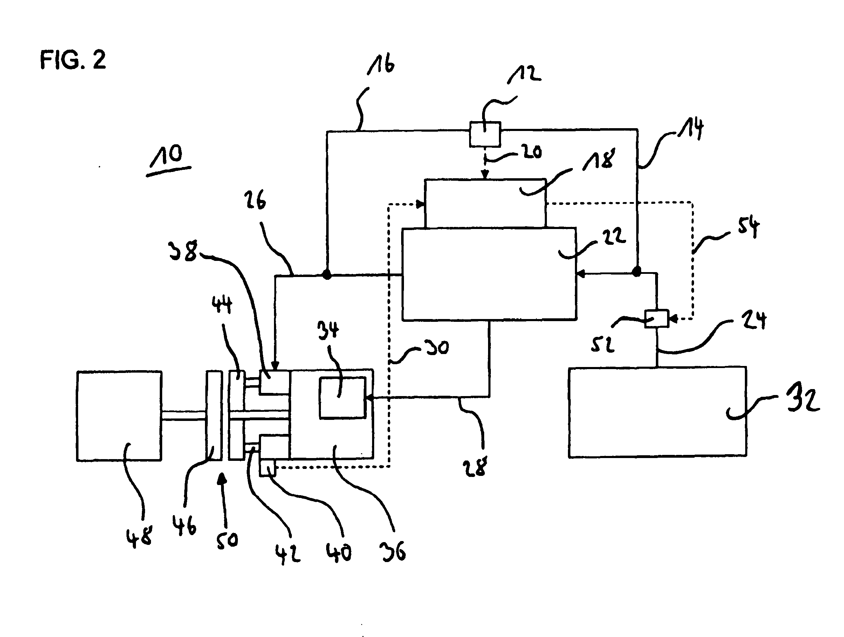

Figur 2 zeigt eine schematische Darstellung der erfindungsgemäßen Steuervorrichtung 10 gemäß einem zweiten Ausführungsbeispiel der Erfindung. Zur Vermeidung von Wiederholungen wird bei der Beschreibung dieses Ausführungsbeispiels lediglich auf die Unterschiede zum ersten Ausführungsbeispiel eingegangen, wobei gleiche Komponenten mit gleichen Bezugszeichen bezeichnet sind. Dieses Ausführungsbeispiel unterscheidet sich von dem ersten Ausführungsbeispiel darin, dass in der Druckmittelleitung 24 zwischen dem Druckmittelspeicher 32 und dem Druckdifferenzsensoranschluss 14 ein Druckbegrenzer 52, beispielsweise in der Form eines Druckbegrenzungsventils, vorgesehen ist, das über eine elektrische Kopplung 54 von dem Steuergerät 18 ansteuerbar ist. Der Druckbegrenzer 52 dient dazu, den Vorratsdruck beziehungsweise den im Druckmittelspeicher 32 vorliegenden Druck auf einen definierten Arbeitsdruck zu begrenzen. Dabei kann die Höhe des Arbeitsdrucks durch die Ansteuerung des Druckbegrenzers 52 durch das Steuergerät 18 eingestellt werden. Alternativ ist auch möglich, einen Druckbegrenzer zu verwenden, der konstruktionsbedingt einen fixen und nicht durch Ansteuerung einstellbaren Arbeitsdruck liefert. Ansonsten gleichen sich das erste und zweite Ausführungsbeispiel, wobei bei der Durchführung des erfindungsgemäßen Verfahrens anstelle des direkten Drucks im Druckmittelspeicher 32 der durch den Druckbegrenzer 52 limitierte Arbeitsdruck ermittelt oder verwendet wird. Das Vorsehen des Druckbegrenzers 52 trägt insgesamt zur Stabilisierung des Gesamtsystems (Getriebesteller 34, Kupplungssteller 40, Druckmittelleitungen 24, 26, 28, etc.) bei, indem starke Druckschwankungen, die stromaufwärts des Druckbegrenzers 52 auftreten, stromabwärts von diesem weitestgehend unterbunden werden, und erleichtert weiterhin den Kalibrierungsbetrieb.

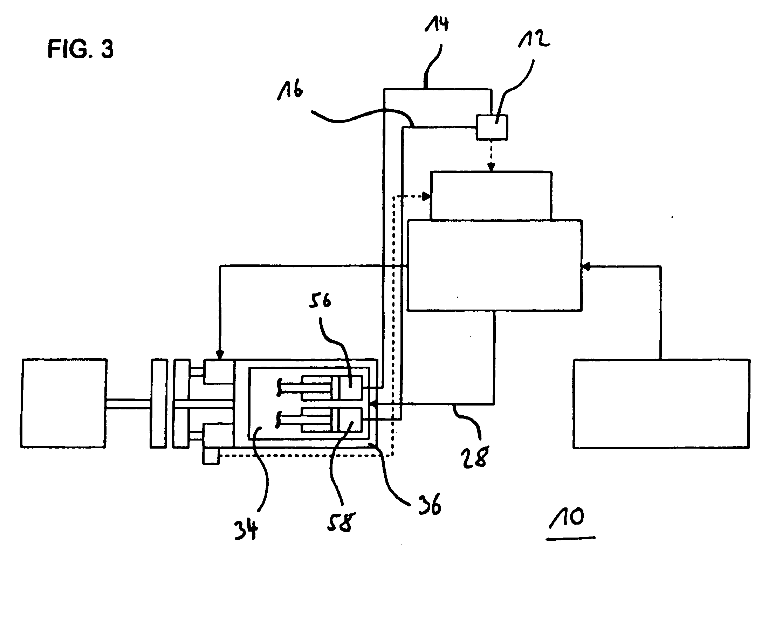

Figur 3 zeigt eine schematische Darstellung der erfindungsgemäßen Steuervorrichtung 10 gemäß einem dritten Ausführungsbeispiel der Erfindung. Zur Vermeidung von Wiederholungen wird bei der Beschreibung dieses Ausführungsbeispiels lediglich auf die Unterschiede zum ersten Ausführungsbeispiel eingegangen, wobei relevante gleiche Komponenten dieses Ausführungsbeispiels mit gleichen Bezugszeichen bezeichnet sind. Das dritte Ausführungsbeispiel unterscheidet sich von dem ersten Ausführungsbeispiel darin, dass der Druckdifferenzsensor 12 nunmehr eine Druckdifferenz zwischen Drücken erfasst, die bei asynchron betätigten Stellgliedern des Getriebestellers 34, nämlich bei einem Gangzylinder 56 und einem Gassenzylinder 58, vorliegen. Dazu ist der Druckdifferenzsensor 12 mit dem Druckdifferenzsensoranschluss 14 mit dem Gangzylinder 56, insbesondere mit einer Zylinderkammer des Gangzylinders 56, gekoppelt. Weiterhin ist der Druckdifferenzsensor 12 mit dem Druckdifferenzsensoranschluss 16 mit dem Gassenzylinder 58, insbesondere mit einer Zylinderkammer des Gassenzylinders 58, gekoppelt. Der Gangzylinder 56 und der Gassenzylinder 58 sind insbesondere dazu vorgesehen, entsprechende Schaltvorgänge des Getriebes 36 in üblicherweise und dem Fachmann bekannter Weise vorzunehmen beziehungsweise einzuleiten. Dadurch, dass Gang- und Gassenzylinder 56, 58 asynchron, also nicht gleichzeitig, mit Druckmittel angesteuert beziehungsweise betätigt werden, kann der Druckdifferenzsensor 12 zumindest eine Druckänderung bei einem der beiden Zylinder 56, 58 erfassen. Wie auch bei den vorstehend erläuterten Ausführungsbeispielen können Kennlinien verwendet werden, um anhand von Auswertungen/Berechnungen des Steuergeräts 18 auf die Stellung beziehungsweise Stellungsänderung eines Zylinderkolbens des entsprechenden Zylinders 56, 58 zuschließen. Ebenso kann analog zu den vorgenannten Ausführungsbeispielen der Kalibrierungsbetrieb durchgeführt werden, um den Absolutdruck bei dem entsprechenden Zylinder 56, 58 zu ermitteln. Auf der Grundlage des Absolutdrucks und/oder der ermittelten Druckänderungen kann die Stellung des Zylinderkolbens des entsprechenden Zylinders 56, 58 gesteuert/geregelt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Steuervorrichtung
- 12: Druckdifferenzsensor
- 14: Druckdifferenzsensoranschluss
- 16: Druckdifferenzsensoranschluss
- 18: Steuergerät
- 20: elektrische Kopplung
- 22: Druckmittelsteuereinrichtung
- 24: Druckmittelleitung
- 26: Druckmittelleitung
- 28: Druckmittelleitung
- 30: elektrische Kopplung
- 32: Druckmittelspeicher
- 34: Getriebesteller
- 36: Getriebe
- 38: Kupplungssteller
- 40: Wegsensor
- 42: Stellglied
- 44: Kupplungsscheibe
- 46: Kupplungsscheibe
- 48: Verbrennungsmotor
- 50: Kupplung
- 52: Druckbegrenzer
- 54: elektrische Kopplung
- 56: Gangzylinder
- 58: Gassenzylinder

## Patentansprüche

1. Verfahren zum Steuern/Regeln einer Steuervorrichtung (10), insbesondere einer Kupplungs- und Getriebesteuervorrichtung (10) für ein Fahrzeug, mit einer Druckmittelsteuereinrichtung (22), der Druckmittel von einer Druckmittelquelle (32) zuführbar ist und über die das Druckmittel zumindest einem Druckmittelverbraucher (34, 38) definiert zuführbar ist, um durch den Druckmittelverbraucher (34, 38) einen Kraftfluss in einem Antriebsstrang des Fahrzeugs einzustellen, wobei durch einen Druckdifferenzsensor (12) eine Druckdifferenz zwischen einem bei dem Druckmittelverbraucher (34, 38) vorliegenden Druck und einem bei der Druckmittelquelle (32) vorliegenden Druck oder eine Druckdifferenz zwischen bei asynchron betätigten Stellgliedern (56) des Druckmittelverbrauchers (34, 38) vorliegenden Drücken erfasst wird, wobei die Steuervorrichtung (10) ein Steuergerät (18) umfasst und wobei das Verfahren folgenden Schritt umfasst:
- Durchführen eines Kalibrierungsbetriebs mittels des Steuergeräts (18) zur Ermittlung der bei dem Druckmittelverbraucher (34, 38) und der Druckmittelquelle (32) oder bei den asynchron betätigbaren Stellgliedem (56, 58) vorliegenden Absolutdrücke basierend auf Signalen von dem Druckdifferenzsensor (12),
- wobei die entsprechenden Absolutdrücke in dem Steuergerät gespeichert werden und als brundlage für die Steuerung / Regelung zur Verfügung gestellt werden.

2. Verfahren nach Anspruch 1, **dadurch gekennzeichnet, dass** die Druckmittelsteuereinrichtung (22) von einem Steuergerät (18) angesteuert wird, um eine Einstellung der definierten Druckmittelzufuhr vorzunehmen.

3. Verfahren nach Anspruch 2, **dadurch gekennzeichnet, dass** das Steuergerät (18) bei dem Kalibrierungsbetrieb des Druckdifferenzsensors (12) über die Druckdifferenz auf einen Absolutdruck bei der Druckmittelquelle (32) oder einen Absolutdruck bei dem Druckmittelverbraucher (34, 38) schließt.

4. Verfahren nach Anspruch 2 oder 3, **dadurch gekennzeichnet, dass** das Steuergerät (18) den Kalibrierungsbetrieb durchführt, wenn bei dem Druckmittelverbraucher (34, 38) Atmosphärendruck herrscht.

5. Verfahren nach einem der Ansprüche 1 bis 4, **dadurch gekennzeichnet, dass** der Druckmittelverbraucher (34, 38) ein Kupplungssteller (38) ist, der eine Kupplung (50) betätigt, um den durch die Kupplung (50) übertragenen Kraftfluss zu variieren.

6. Verfahren nach Anspruch 5, **dadurch gekennzeichnet, dass** bei dem Kupplungssteller (38) in einem nicht die Kupplung (50) betätigenden Zustand nahezu der Atmosphärendruck herrscht.

7. Verfahren nach Anspruch 5 oder 6, **dadurch gekennzeichnet, dass** das Steuergerät (18) basierend auf Signalen von dem Druckdifferenzsensor (12) die Betätigung der Kupplung (50) steuert/regelt.

8. Verfahren nach Anspruch 7, **dadurch gekennzeichnet, dass** das Steuergerät (18) die Steuerung/Regelung der Kupplungsbetätigung in Abhängigkeit von einer Kraft-Weg-Kennlinie einer der Kupplung (50) zugeordneten Kupplungsfeder'vornimmt.

9. Verfahren nach Anspruch 7 oder 8, **dadurch gekennzeichnet, dass** das Steuergerät (18) basierend auf Signalen von dem Druckdifferenzsensor (12) die Betätigung der Kupplung (50) steuert/regelt, wenn ein Wegsensor (40) zur Stellwegerfassung der Kupplung (50) ausgefallen ist.

10. Verfahren nach Anspruch 9, **dadurch gekennzeichnete dass** das Steuergerät (18) eine Fehlermeldung ausgibt, wenn der Wegsensor (40) ausgefallen ist.

11. Verfahren nach einem der Ansprüche 1 bis 10, **dadurch gekennzeichnet, dass** die Druckmittelquelle (32) einen Druckbegrenzer (54) umfasst, über den das Druckmittel von der Druckmittelquelle (32) der Druckmittelsteuereinrichtung (22) zugeführt wird.

12. Verfahren nach Anspruch 1, **dadurch gekennzeichnet, dass** die Druckdifferenz zwischen dem Druck bei einem als Stellglied ausgebildeten Gangzylinder (56) und dem Druck bei einem als Stellglied ausgebildeten Gassenzylinder (58) eines Getriebestellers (34) erfasst wird.

13. Steuervorrichtung, insbesondere Kupplungs- und Getriebesteuervorrichtung (10) für ein Fahrzeug, eingerichtet zur Durchführung des Verfahrens nach einem der Ansprüche 1 bis 12.

## Claims

1. Method of controlling/regulating a control device (10), in particular a clutch and gearbox control device (10) for a vehicle, comprising un means (22) for controlling a pressurised medium, which is adapted to be supplied with the pressurised medium from a pressurised-medium source (32) and via which said pressurised medium can be supplied in a defined form to at least one pressurised-medium consumer (34, 38) for adjusting a flow of power in a power train of said vehicle by means of said pressurised-medium consumer (34, 38), with a differential-pressure sensor (12) being employed to detect a difference in pressure between a pressure level present at said pressurised-medium consumer (34, 38) and a pressure level present at said pressurised-medium source (32) or a difference in pressure between pressure levels present at final control elements (56) operated asynchronously of said pressurised-medium consumer (34, 38), with said control device (10) including a controller (18), and with the method comprising the following step:
- carrying out a calibration operation by means of said controller (18) for detecting the absolute values of the pressure present at said pressurised-medium consumer (34, 38) and said pressurised-medium source (32) or at said final control elements (56, 58) adapted for asynchronous operation, on the basis of signals from said differential-pressure sensor (12),
- wherein the respective absolute pressure values are stored in said controller and are made available as the basis for control/regulation operations.

2. Method according to Claim 1, **characterised in that** said pressurised-medium control device (22) is controlled by a controller for performing an adjustment of said defined pressurised-medium supply.

3. Method according to Claim 2, **characterised in that** in the calibration operation of said differential-pressure sensor (12), said controller (18) concludes an absolute pressure at said pressurised-medium source (32) or an absolute pressure at said pressurised-medium consumer (34, 38) via said difference in pressure.

4. Method according to Claim 2 or 3, **characterised in that** said controller (18) performs the calibration operation when atmospheric pressure is present at said pressurised-medium consumer (34, 38).

5. Method according to any of the Claims 1 to 4, **characterised in that** said pressurised-medium consumer (34, 38) is a final clutch control element (38) that actuates a clutch (50) for varying the flow of power transmitted by means of said clutch (50).

6. Method according to Claim 5, **characterised in that** a pressure near to atmospheric pressure prevails at said final clutch control element (38) in a condition in which said clutch (50) is not actuated.

7. Method according to Claim 5 or 6, **characterised in that** said controller (18) controls/regulates the actuation of said clutch (50) on the basis of signals from said differential-pressure sensor (12).

8. Method according to Claim 7, **characterised in that** said controller (18) performs the control/regulation of the clutch actuation in response to a load displacement characteristic curve of a clutch spring associated with said clutch (50).

9. Method according to Claim 7 or 8, **characterised in that** said controller, based on signals from said differential-pressure sensor (12), controls/regulates the actuation of said clutch (50) when a displacement sensor (40) for detection of the control displacement of said clutch (50) has failed.

10. Method according to Claim 9, **characterised in that** said controller (18) outputs an error message when said displacement sensor (40) has failed.

11. Method according to any of the Claims 1 to 10, **characterised in that** said pressurised-medium source (32) comprises a pressure limiting means (54) via which said pressurised medium is supplied from said pressurised-medium source (32) to said pressurised-medium control means (22).

12. Method according to Claim 1, **characterised in that** said pressure difference between the pressure at a gear cylinder (56) configured as final control element and the pressure at a gap cylinder (58) of a final gearbox control element (34), which is configured as final control element, is detected.

13. Control device, in particular clutch and gearbox control device (10) for a vehicle, equipped and designed for carrying through the method according to any of the Claims 1 to 12.

## Revendications

1. Procédé de commande/réglage d'un dispositif de commande (10), en particulier d'un dispositif de commande d'embrayage et de la boîte de vitesses (10) pour un véhicule, comprenant un moyen (22) de commande d'un milieu sous pression, qui est apte à être alimenté en milieu sous pression à partir d'une source de milieu sous pression (32) et via lequel ledit milieu sous pression peut être alimenté sous forme définie à au moins un consommateur de milieu sous pression (34, 38) afin de régler un flux de puissance dans une chaîne d'entraînement dudit véhicule moyennant ledit consommateur de milieu sous pression (34, 38), à un détecteur de différence entre pressions (12) étant utilisé afin de détecter une différence en pression entre un niveau de pression régnant audit consommateur de milieu sous pression (34, 38) et un niveau de pression régnant à ladite source de milieu sous pression (32) ou une différence en pression entre des niveaux de pression présents à des organes finaux (56) commandés de manière asynchrone dudit consommateur de milieu sous pression (34, 38), audit dispositif de commande (10) renfermant un module de commande (18), et au procédé comprenant l'étape suivante :
- réalisation d'un cycle de calibrage moyennant ledit module de commande (18) afin de détecter les valeurs absolues de la pression régnant audit consommateur de milieu sous pression (34, 38) et ladite source de milieu sous pression (32) ou auxdits organes finaux (56, 58) aptes à un fonctionnement asynchrone, sur la base des signaux venant dudit détecteur de différence entre pressions (12),
- dans lequel les valeurs absolues respectives de pression sont mises en mémoire dans ledit module de commande et sont rendues disponible en tant que base pour des opérations de commande/réglage.

2. Procédé selon la revendication 1, **caractérisé en ce que** ledit dispositif de commande de milieu sous pression (22) est commandé par un module de commande afin de réaliser un réglage de l'alimentation définie en milieu sous pression.

3. Procédé selon la revendication 2, **caractérisé en ce qu'**au cours du cycle de calibrage dudit détecteur de différence entre pressions (12), ledit module de commande (18) conclut une pression absolue à ladite source de milieu sous pression (32) ou une pression absolue audit consommateur de milieu sous pression (34, 38) via ladite différence en pression.

4. Procédé selon la revendication 2 ou 3, **caractérisé en ce que** ledit module de commande (18) réalise le cycle de calibrage, quand une pression atmosphérique règne audit consommateur de milieu sous pression (34, 38).

5. Procédé selon une quelconque des revendications 1 à 4, **caractérisé en ce que** ledit consommateur de milieu sous pression (34, 38) est un organe final de commande de l'embrayage (38), qui commande un embrayage (50) afin de varier le flux de puissance transmis moyennant ledit embrayage (50).

6. Procédé selon la revendication 5, **caractérisé en ce qu'**une pression presqu'au niveau de la pression atmosphérique règne audit organe final de commande de l'embrayage (38) en un état, dans lequel ledit embrayage (50) n'est pas actionné.

7. Procédé selon la revendication 5 ou 6, **caractérisé en ce que** ledit module de commande (18) commande/règle l'actionnement dudit embrayage (50) sur la base des signaux venant dudit détecteur de différence entre pressions (12).

8. Procédé selon la revendication 7, **caractérisé en ce que** ledit module de commande (18) réalise l'opération de commande/réglage d'actionnement de l'embrayage en réponse à une courbe caractéristique de puissance-déplacement d'un ressort de l'embrayage, qui est affecté audit embrayage (50).

9. Procédé selon la revendication 7 ou 8, **caractérisé en ce qu'**à la base des signaux venant dudit détecteur de différence entre pressions (12), ledit module de commande commande/règle l'actionnement dudit embrayage (50), quand un détecteur de déplacement (40) pour la détection du parcours de réglage dudit embrayage (50) est tombé en panne.

10. Procédé selon la revendication 9, **caractérisé en ce que** ledit module de commande (18) sort un message d'erreur, quand ledit détecteur de distance (40) est tombé en panne.

11. Procédé selon une quelconque des revendications 1 à 10, **caractérisé en ce que** ladite source de milieu sous pression (32) comprend un limiteur de pression (54), via lequel ledit milieu sous pression est alimenté à partir de ladite source de milieu sous pression (32) vers ledit moyen (22) de commande de milieu sous pression.

12. Procédé selon la revendication 1, **caractérisé en ce que** ladite différence en pression entre la pression à un cylindre de rapport (56), qui est conçu sous forme d'un organe final, et la pression à un cylindre de voie (58) d'un organe de commande de la boîte de vitesses (34), qui est conçu sous forme d'un organe final, est détectée.

13. Dispositif de commande, en particulier dispositif de commande d'embrayage et de la boîte de vitesses (10) pour un véhicule, équipé et conçu pour la réalisation du procédé selon une quelconque des revendications 1 à 12.
